(19) Europäisches Patentamt
European Patent Office
Office européen des brevets

(11) **EP 2 664 264 B1**

(12) **EUROPEAN PATENT SPECIFICATION**

(45) Date of publication and mention
of the grant of the patent:
**10.03.2021 Bulletin 2021/10**

(51) Int Cl.:
***A47L 15/42*** *(2006.01)*  ***D06F 34/22*** *(2020.01)*
***G01N 21/53*** *(2006.01)*

(21) Application number: **12168027.6**

(22) Date of filing: **15.05.2012**

(54) **Method and device for measuring turbidity**

Verfahren und Vorrichtung zur Messung von Trübungen

Procédé et dispositif de mesure de la turbidité

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.11.2013 Bulletin 2013/47**

(73) Proprietor: **Electrolux Home Products Corporation N.V.**
**1130 Brussels (BE)**

(72) Inventors:
• **Dreossi, Giuseppe**
**105 45 Stockholm (SE)**

• **Pers, Per-Erik**
**17673 Järfälla (SE)**

(74) Representative: **Electrolux Group Patents**
**AB Electrolux**
**Group Patents**
**105 45 Stockholm (SE)**

(56) References cited:
**EP-A1- 0 748 891**     **EP-A1- 2 182 105**
**DE-A1- 19 544 135**    **US-A- 5 477 576**
**US-A- 5 555 583**      **US-A1- 2011 094 544**
**US-A1- 2012 090 654**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## TECHNICAL FIELD

The invention relates to a method of, and device for, measuring turbidity of a fluid in a household appliance for washing and rinsing goods.

## BACKGROUND

Dishwashers and washing machines are household appliances for automatically washing articles such as for instance plates, glasses or cutlery in case of a dishwasher, and sheets, clothes or other garments in case of a washing machine. In order to perform washing of the articles contained in the household appliance, a detergent is introduced into a detergent container or receptacle before washing commences and water is supplied to the appliance. The detergent may be of different types, such as powder, liquid, gel or tablets. In various applications, it may be desirable to distinguish between different types of detergent used in the household appliance and/or to detect other particles e.g. in order to determine soil characteristics.

EP 2 206 457 discloses use of a turbidity sensor to detect the presence and the type of detergent added to a wash cycle in a dishwasher at least for a short time subsequent to detergent release to avoid starting a washing cycle without detergent. By means of monitoring turbidity, it can be determined whether no detergent is used, detergent with polymers is used or detergent without polymers is used.

However, characteristics of a light source (such as a light emitting diode) and/or a light-sensitive element (such as a photo transistor) included in the turbidity sensor vary with temperature. This has the effect that the measured turbidity may vary from one temperature to another even if the actual turbidity value of the water effectively is the same.

EP 0 748 891 discloses a turbidity sensor built in at a location being reachable by washing fluid in an automatic washing machine having a microprocessor for process control, a light transmitter and a light receiver for transmitting light through the washing fluid in a measurement path. A method for temperature compensation of measured values of the turbidity sensor includes calculating a temperature coefficient of the turbidity sensor for each operating point and storing the temperature coefficient in memory as a correction value in software for evaluating measurement results of the turbidity sensor. A respective measurement result is corrected by using the temperature coefficient as a function of a temperature being present and measured at the turbidity sensor.

US 5,555,583 discloses a dynamic temperature compensation method for a turbidity sensor in an appliance for washing articles. The method includes the steps of: retaining substantially particle-free liquid upon completion of cleansing operations in the appliance, reading initial values of temperature and turbidity of the liquid, measuring additional values of temperature and turbidity of the liquid at predetermined time intervals, and calculating a temperature coefficient, based upon respective ones of the initial and the additional values of temperature and turbidity, for characterizing a temperature response of the turbidity sensor over a predetermined temperature range.

## SUMMARY

An object of the present invention is thus to provide an improved method and device for measuring turbidity of a fluid in a household appliance such as a dishwasher or a washing machine.

This object is attained according to a first aspect of the present invention by a method of measuring turbidity of a fluid in a household appliance for washing and rinsing goods. The method comprises the steps of measuring, by means of a turbidity sensor, turbidity of the fluid by emitting light through the fluid and detecting the amount of light passing through the fluid, and measuring the temperature of the turbidity sensor. Further, the method comprises the steps of determining the measured turbidity by analysing the amount of emitted light and the amount of detected light and calculating, as a function of the measured temperature, a value of a drive signal to be supplied to the turbidity sensor for controlling the emitted light, the function being an equation of at least the second degree. Finally, the method comprises the step of setting the drive signal to the calculated value, thereby controlling the amount of emitted light.

This object is attained according to a second aspect of the present invention by a device for measuring turbidity of a fluid in a household appliance for washing and rinsing goods. The device comprises a turbidity sensor arranged to measure turbidity of the fluid by means of a light source emitting light through the fluid onto a light-sensitive element, and a temperature sensor for measuring the temperature of the turbidity sensor. Further, the device comprises a processor communicatively connected to the turbidity sensor and the temperature sensor, the processor being arranged to determine the measured turbidity by analysing amount of light output from the light source and the light detected by the light-sensitive element, the processor further being arranged to calculate, as a function of the measured temperature, a value of a drive signal to be supplied to the light source, and to set the drive signal to the calculated value, thereby controlling the amount of light output from the light source.

Thus, by expressing the drive signal as a function of the measured temperature of the turbidity sensor, wherein the function is an equation of at least the second degree, the present invention advantageously facilitates compensation of the amount of light output from the light source of the turbidity sensor such that the amount of output light does not vary with temperature. The characteristic of an ideal light source would be linear with respect to temperature. However, in practice, the relation between the intensity of the light output from the light source and the temperature of the light source is non-linear.In an embodiment, the drive signal is modelled as an equation of the second degree. In a further embodiment of the present invention, the drive signal is modelled as an equation of the third degree. In still a further embodiment of the present invention, the drive signal is modelled as an equation of the fourth degree. In an exemplifying embodiment, the drive signal $V_{dr}$ is a drive voltage modelled as:

$$V_{dr} = at^4 \pm bt^3 \pm ct^2 \pm dt,$$

where

t denotes temperature measured by the temperature sensor. The parameters a, b, c, d are generally dependent on which type of LED (e.g. which manufacturer) is utilized, and the mathematical operators, i.e. whether + or - is used, may also vary with the type of LED employed. In practice, this is tested empirically for a given LED until an appropriate function resulting in good temperature compensation has been elaborated. For a first type of LED, an equation of the second degree may be appropriate, while for a second type of LED, the non-linearity may be more accurately expressed in the form of an equation of the third degree, and so on. Thus, the aim of the modeled drive voltage is to find an approximation that appropriately corresponds to the non-linearity of the actual LED used. Generally, the higher the degree of the equation elaborated, the more accurate the temperature compensation. However, the complexity of the calculations increases as the degree of the equation used increases. Thus, equations of even higher degrees can be envisaged, but the higher the degree, the higher the complexity of the calculations. A consequence of increased calculation complexity is that the processing load of computing means handling the calculations (typically a microprocessor as will be discussed in more detail in the following) inevitably increases.

The inventors have noted that a temperature increase of the housing of the turbidity sensor from about 20°C to 60°C may result in a difference in measured turbidity of up to 50%. Advantageously, the method and device of embodiments of the present invention overcomes this problem.

This object is attained in a third aspect of the present invention by a method of measuring turbidity of a fluid in a household appliance for washing and rinsing goods. The method comprises the steps of measuring, by means of a turbidity sensor, turbidity of the fluid by emitting light through the fluid and detecting the amount of light passing through the fluid, and measuring the temperature of the turbidity sensor. The method further comprises the steps of calculating, as a function of the measured temperature, an adjusted value of the detected light, the function being an equation of at least the second degree, and determining the measured turbidity by analysing the amount of emitted light and the adjusted value of the detected light.

This object is attained in a fourth aspect of the present invention by a device for measuring turbidity of a fluid in a household appliance for washing and rinsing goods.

The device comprises a turbidity sensor arranged to measure turbidity of the fluid by means of a light source emitting light through the fluid onto a light-sensitive element, and a temperature sensor for measuring the temperature of the turbidity sensor. Further, the device comprises a processor communicatively connected to the turbidity sensor and the temperature sensor, which processor is arranged to calculate, as a function of the measured temperature, an adjusted value of the light detected by the light-sensitive element, the function being an equation of at least the second degree. The processor is further arranged to determine the measured turbidity by analysing amount of light output from the light source and the adjusted value of the light detected by the light-sensitive element.

In these last two aspects of the invention, the output signal of the light-sensitive element is expressed as a function of the measured temperature of the turbidity sensor, wherein the function is an equation of at least the second degree, which advantageously facilitates compensation of the detected amount of light such that the measured turbidity does not vary with temperature, or at least that the variations in turbidity over temperature are reduced.

Thus, in the first and second aspects of the invention on the one hand, and the third and fourth aspects on the other, the measured turbidity value will not vary with varying temperature, or at least the variation in turbidity over temperature will be reduced, even though the approach of compensating for varying temperature is different. It is to be understood that the subject-matter of the different aspects may be combined into a new aspect of the present invention. Hence, a method and device could be provided where both the value of drive signal and the value of the detected light is adjusted as has been described.

In the following, the household appliance in the context of which the present invention is discussed is exemplified in the form of a dishwasher. Further, the fluid for which turbidity is measured is occasionally referred to as "process water" in the following.

By the expression process water as used herein is meant a liquid containing mainly water that is used in and circulates in a water consuming household appliance for washing and rinsing goods. The process water is water that may contain detergent and/or rinse aid in a varying amount. The process water may also contain soil, such as food debris or other types of solid particles, as well as dissolved liquids or compounds. Process water used in a main wash cycle is sometimes referred to as the wash liquid. Process water used in a rinse cycle is sometimes referred to as cold rinse or hot rinse depending on the temperature in the rinse cycle.

It is noted that the invention relates to all possible combinations of features recited in the claims. Further features of, and advantages with, the present invention will become apparent when studying the appended claims and the following description. Those skilled in the art realize that different features of the present invention can be combined to create embodiments other than those described in the following.

**BRIEF DESCRIPTION OF THE DRAWINGS**

The invention is now described, by way of example, with reference to the accompanying drawings, in which:

Figure 1 illustrates a turbidity detector in accordance with an exemplary embodiment of the present invention;

Figure 2 shows a flowchart illustrating a method of measuring turbidity of process water in a household appliance for washing and rinsing goods according to an embodiment of the present invention;

Figure 3 shows a flowchart illustrating a method of measuring turbidity of process water in a household appliance for washing and rinsing goods according to another embodiment of the present invention; and

Figure 4 illustrates a dishwasher implementing the turbidity detector of the present invention for the purpose of determining whether to discharge process water or not.

**DETAILED DESCRIPTION**

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art.

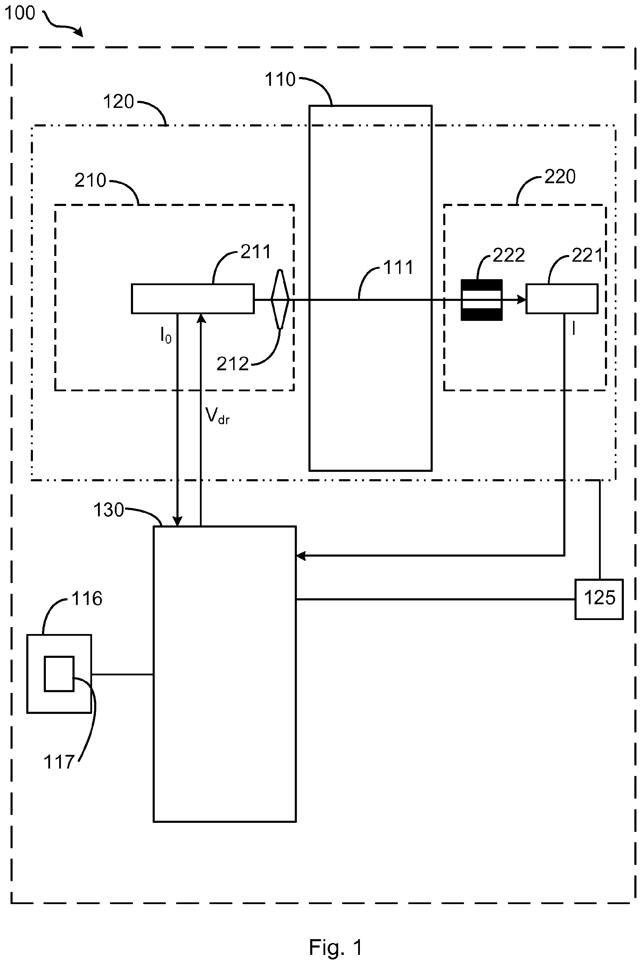

Figure 1 illustrates a device for detecting turbidity, i.e. a turbidity detector 100, in accordance with an exemplary embodiment of the present invention, which advantageously can be used for detecting particles such as detergent or soil in the fluid circulating in a household appliance used for cleaning goods, such as a washing machine or a dish washer. The turbidity detector 100 according to this exemplary embodiment, which is represented in the form of a block diagram, comprises a turbidity sensor 120 for measuring the turbidity of a fluid 110 typically flowing in a transparent tube. The fluid will in the following be referred to as process water. Furthermore, in the disclosed embodiment, the turbidity detector 100 comprises a data processing unit or processor 130 communicatively coupled to the turbidity sensor 120. In the disclosed embodiment, the turbidity sensor 120 comprises a light-emitting portion 210 and a light-receiving portion 220. The light-emitting portion 210 and the light-receiving portion 220 are positioned such that light emitted by the former at least for the most part can propagate through the process water 110 to reach the latter. The processor controls the amount of light being output from the light-emitting portion by applying a drive signal $V_{dr}$, which may be embodied in the form of e.g. a voltage or a current controlling the light-emitting portion. In the disclosed embodiment, the light-emitting portion 210 comprises a light source 211, such as a light emitting diode (LED), and a focusing lens 212 may optionally be included. The focusing lens 212 may serve as a relatively simple means for collecting the light beams emitted by the light source 211. The light emitted by the light source 211 at a radiant intensity $I_0$ propagates along an optical path 111, a portion of which intersects the process water 110, and is eventually received by the light-receiving portion 220. Along the optical path 111, optical attenuation and scattering may occur, which may be a result of detergent dissolved in the process water 110. Thus, the light beam exits the process water 110 with intensity I, which typically is comparatively lower than the radiant intensity $I_0$ of the emitted light.

To detect the emitted light, the light-receiving portion 220 comprises a light-sensitive element 221 such as a phototransistor, a photodiode or a photoresistor. To prevent rescattered light from exciting the light-sensitive element 221, it may be preceded by a collimator 222 or a similar device. A signal that encodes the radiant intensity of the received light I can then be provided to the processor 130. As can be seen in Figure 1, the processor 130 receives the two signals indicative of the radiant intensities of the emitted and received light; I and $I_0$, respectively, and provides, on the basis of these two signals, a signal indicative of the turbidity of the process water 110. In practice, transmittance of the process water 110 is calculated by comparing the radiant intensity (radiated power per unit solid angle) $I_0$ of the emitted light and the radiant intensity I of the received light by calculating $I/I_0$. The turbidity generally refers to concentration of light-scattering or light-absorbing particles suspended in the process water 110. If turbidity increases in the process water 110 then, for a given wavelength, the transmittance generally decreases in dependence of e.g. the diameter distribution of the suspended particles, the refractive index of the suspended particles, and the surface properties of the suspended particles. Thus, the transmittance is indicative of the turbidity of the process water 110 via an empirical transmittance-turbidity curve, and a momentary turbidity value can be output from the processor 130. Hence, to conclude, the processor 130 determines the measured turbidity by analysing amount of light output from the light source 211 and the light detected by the light-sensitive element 221.

Now, as previously has been described, the LED 211 of the turbidity sensor 120 may have a characteristic that varies with temperature. Typically, for the same drive signal being applied, the intensity of the light output from the LED 211 increases with rising temperature. As a consequence, the determined turbidity varies with temperature, which is undesirable. In an embodiment of the present invention, the turbidity detector 100 is further supplied with a temperature sensor 125 for measuring the temperature of the turbidity sensor 120. The temperature sensor 125 it typically arranged such that it measures the temperature of the turbidity sensor housing. The processor 130 uses the measured temperature to calculate, as a function of the measured temperature, which is an equation of at least the second degree, a value of the drive signal $V_{dr}$ to be supplied to the LED 211, and to set the drive signal to the calculated value, thereby controlling the amount of light output from the LED such that temperature variations are considered. Ultimately, by means of performing compensation and adjusting the drive signal $V_{dr}$ accordingly, the intensity of the LED 211 will not vary with temperature, or at least possible variations will be reduced.

In an embodiment of the present invention, the drive signal is calculated using an equation of the second degree. In a further embodiment of the present invention, the drive signal is calculated using an equation of the third degree. In still a further embodiment of the present invention, the drive signal is calculated using an equation of the fourth degree. In an exemplifying embodiment, the drive signal $V_{dr}$ is a drive voltage modelled as:

$$ V_{dr} = at^4 \pm bt^3 \pm ct^2 \pm dt, $$

where

t denotes temperature measured by the temperature sensor 125. The parameters a, b, c, d are generally dependent on which type of LED 211 (e.g. which manufacturer) is used, and the mathematical operators, i.e. whether + or - is used, may also vary with the type of LED employed. In practice, this is tested empirically for a given LED until an appropriate function resulting in good temperature compensation has been elaborated.

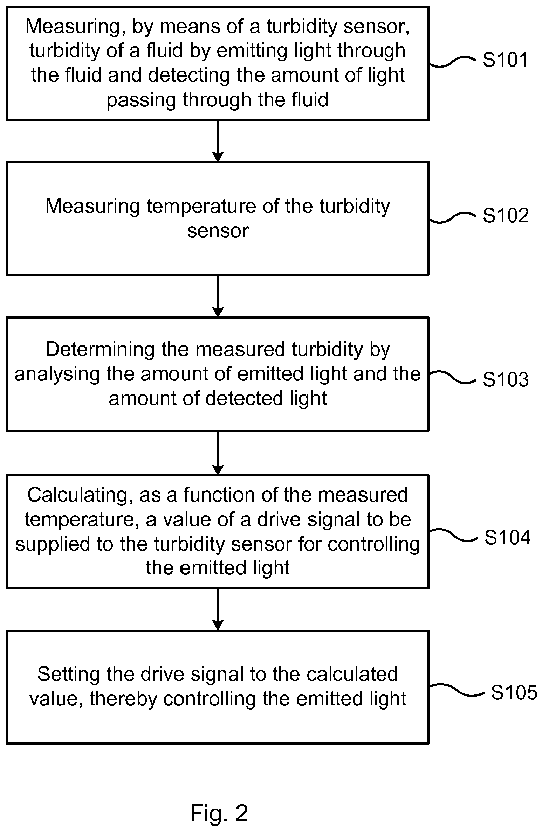

Figure 2 shows a flowchart illustrating a method of measuring turbidity of process water in a household appliance for washing and rinsing goods according to an embodiment of the present invention. In a first step S101, the turbidity sensor 120 measures turbidity of the process water 110 by emitting light from the light source 211 along an optical 111 through the fluid and detecting the amount of light passing through the fluid at the light-sensitive element 221. In a second step S102, the temperature of the turbidity sensor 120 is measured by the temperature sensor 125, and further in step S103, the microprocessor 130 determines the measured turbidity by analysing the amount of light $I_0$ emitted by the light source 211 and the amount of light I detected by the light-sensitive element 221. Thereafter, in step S104, the microprocessor 130 calculates, as a function of the measured temperature, which is an equation of at least the second degree, a value of a drive signal $V_{dr}$ to be supplied to the turbidity sensor 120 for controlling the emitted light. Finally, in step S105, the microprocessor 130 sets the drive signal $V_{dr}$ to the calculated value, thereby controlling the amount of emitted light, i.e. the intensity $I_0$ of light emitted by the light source 211.

Again with reference to Figure 1, a further embodiment of the present invention will be described. As in the previously described embodiment, the processor 130 applies a drive signal $V_{dr}$ to control the amount of light being output from the light source 211 of the light-emitting portion 210 of the turbidity sensor 120. The light emitted by the light source 211 at a radiant intensity $I_0$ propagates along an optical path 111, a portion of which intersects the process water 110, and is eventually received by the light-receiving portion 220. Along the optical path 111, optical attenuation and scattering may occur, which may be a result of detergent dissolved in the process water 110. Thus, the light beam exits the process water 110 with intensity I, which typically is comparatively lower than the radiant intensity $I_0$ of the emitted light. To detect the emitted light, the light-receiving portion 220 comprises a light-sensitive element 221 such as a phototransistor, a photodiode or a photoresistor. A signal that encodes the radiant intensity of the received light I can then be provided to the processor 130. As can be seen in Figure 1, the processor 130 receives the two signals indicative of the radiant intensities of the emitted and received light; I and $I_0$, respectively, and provides, on the basis of these two signals, a signal indicative of the turbidity of the process water 110. In practice, transmittance of the process water 110 is calculated by comparing the radiant intensity (radiated power per unit solid angle) $I_0$ of the emitted light and the radiant intensity I of the received light by calculating $I/I_0$. The turbidity generally refers to concentration of light-scattering or light-absorbing particles suspended in the process water 110. If turbidity increases in the process water 110 then, for a given wavelength, the transmittance generally decreases in dependence of e.g. the diameter distribution of the suspended particles, the refractive index of the suspended particles, and the surface properties of the suspended particles. Thus, the transmittance is indicative of the turbidity of the process water 110 via an empirical transmittance-turbidity curve, and a momentary turbidity value can be output from the processor 130.

The turbidity detector 100 is further supplied with a temperature sensor 125 for measuring the temperature of the turbidity sensor 120. In this particular embodiment, instead of calculating a new value of the drive signal as a function of the measured temperature, the processor calculates, as a function of the measured temperature, an adjusted value of the light detected by the light-sensitive element. That is, instead of using intensity I for determining the measured turbidity, an adjusted value $I_{adj}$ is calculated as a function of the measured temperature, which is an equation of at least the second degree, and used for determining turbidity.

Consequently, transmittance of the process water 110 is calculated by comparing the radiant intensity (radiated power per unit solid angle) $I_0$ of the emitted light and the adjusted radiant intensity $I_{adj}$ of the received light by calculating $I_{adj}/I_0$, and the turbidity is determined in analogy with what previously has been described. Ultimately, by means of adjusting the detected light, the determined turbidity will not vary with temperature, or at least possible variations will be reduced.

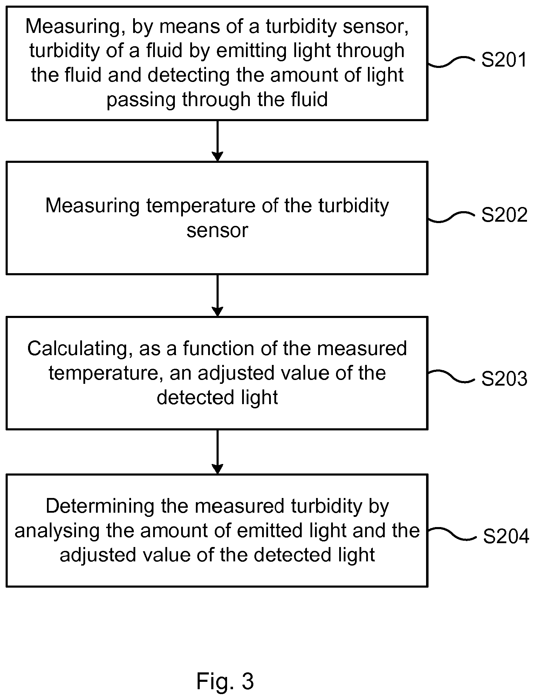

Figure 3 shows a flowchart illustrating a method of measuring turbidity in a household appliance for washing and rinsing goods according to an embodiment of the present invention. In a first step S201, the turbidity sensor 120 measures turbidity of the process water 110 by emitting light with intensity $I_0$ from the light source 211 along an optical 111 through the fluid and detecting light passing through the fluid at the light-sensitive element 221 with intensity I. In a second step S202, the temperature of the turbidity sensor 120 is measured by the temperature sensor 125, and further in step S203, the microprocessor 130 calculates, as a function of the measured temperature, an adjusted value $I_{adj}$ of the detected light. Further, the processor 130 is arranged to determine in step S204 the measured turbidity by analysing the amount of light $I_0$ emitted by the light source 211 and the adjusted value $I_{adj}$ of light with intensity I detected by the light-sensitive element 221. In an exemplifying embodiment of the present invention, the amount of detected light I is adjusted according to:

$$I_{adj} = I_0 * (at^3 \pm bt^2 \pm ct),$$

where
t denotes temperature measured by the temperature sensor 125. In practice, the amount of detected light I (and the correspondingly adjusted value $I_{adj}$) is represented by a voltage, the level of which determines the intensity of the light. Thus, the output signal I of the light-sensitive element 221 is expressed as a function of the measured temperature t of the turbidity sensor 120, which advantageously facilitates compensation of the detected amount of light by producing an adjusted value $I_{adj}$ such that the measured turbidity does not vary with temperature, or at least that the variations in measured turbidity over temperature are reduced. As in the case of the LED 211, the parameters a, b, c are generally dependent on which type of light-sensitive element 221 (e.g. a phototransistor, a photodiode or a photoresistor) being utilized, and the mathematical operators, i.e. whether + or - is used, may also vary with the type of element employed. In practice, this is tested empirically for a given photodiode until an appropriate function resulting in good temperature compensation has been elaborated. Generally, the higher the degree of the equation elaborated, the more accurate the temperature compensation. However, the complexity of the calculations increases as the degree of the equation used increases.

Thus, a turbidity detector 100 according to the present invention is advantageously implemented in a household appliance such as e.g. a dishwasher or a washing machine. In practice, the processor is arranged to execute a computer program 117 downloaded to a suitable storage medium 116 associated with the microprocessor, such as a RAM, a Flash memory or a hard disk. The processor 130 is arranged to at least partly carry out the method according to embodiments of the present invention when the appropriate computer program 117 comprising computer-executable components is downloaded to the memory 116 and executed by the processor 130. The storage medium 116 may be a computer program product comprising the computer program 117. Alternatively, the computer program 117 may be transferred to the storage medium 116 by means of a suitable computer program product, such as a memory stick. As a further alternative, the computer program 117 may be downloaded to the storage medium 116 over a network in case the appliance is arranged with such facilities. The processor 130 may alternatively be embodied in the form of an application specific integrated circuit (ASIC), a field-programmable gate array (FPGA), a complex programmable logic device (CPLD), etc. It should be noted that the turbidity detector 100 of the present invention may employ a processor already available in the household appliance for carrying out the present invention.

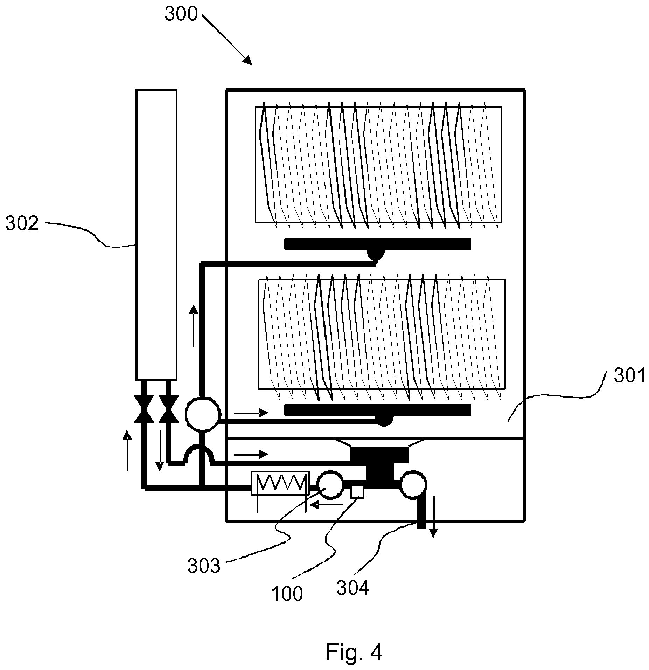

The implementation of a turbidity detector 100 as has been described in the above is illustrated in Figure 4 showing a household appliance 300, i.e. a dishwasher. The dishwasher comprises a wash tub 301 for receiving goods to be washed therein. The dishwasher is provided with a tank 302 for storing at least a part of the rinse water from a cold rinse cycle and/or a hot rinse cycle for subsequent reuse. A turbidity detector 100 as has been described in detail hereinabove is provided in the dishwasher to carry out measurements and/or detections on the process water in the appliance in order to determine turbidity of the process water. The detergent detector 100 is positioned in the sump or in the piping just before or after the pump distributing the process water out to the wash arms in the wash tub. Turbidity measurements could be undertaken by the device 100 e.g. in order to determine whether process water is clean enough to circulate in the dishwasher during the a present or subsequent washing cycle or whether the process water is too dirty and should be discarded. Process water is then pumped by a pump 303 either to the tank 302 for reuse, or is discarded through an outlet drain 304.

Even though the invention has been described with reference to specific exemplifying embodiments thereof, many different alterations, modifications and the like will become apparent for those skilled in the art. The described embodiments are therefore not intended to limit the scope of the invention, as defined by the appended claims.

**Claims**

1. A method of measuring turbidity of a fluid in a household appliance for washing and rinsing goods, the method comprising the steps of:

   measuring (S101), by means of a turbidity sensor, turbidity of the fluid by emitting light through the fluid and detecting the amount of light passing through the fluid;
   measuring (S102) temperature of the turbidity sensor;
   determining (S103) the measured turbidity by analysing the amount of emitted light and the amount of detected light; the method further being **characterized in** comprising the steps of:

      calculating (S104), as a function of the measured temperature, a value of a drive signal to be supplied to the turbidity sensor for controlling the emitted light, the function being an equation of at least the second degree; and
      setting (S105) the drive signal to the calculated value, thereby controlling the amount of emitted light.

2. A device (100) for measuring turbidity of a fluid (110) in a household appliance for washing and rinsing goods, the device comprising:

   a turbidity sensor (120) arranged to measure turbidity of the fluid by means of a light source (211) emitting light through the fluid onto a light-sensitive element (221);
   a temperature sensor (125) for measuring temperature of the turbidity sensor; the device further being **characterized in** comprising:
   a processor (130) communicatively connected to the turbidity sensor and the temperature sensor, the processor being arranged to determine the measured turbidity by analysing amount of light output from the light source and the light detected by the light-sensitive element, the processor being further arranged to calculate, as a function of the measured temperature, a value of a drive signal ($V_{dr}$) to be supplied to the light source, the function being an equation of at least the second degree, and to set the drive signal to the calculated value, thereby controlling the amount of light output from the light source.

3. The device (100) of claim 2, wherein the function is an equation of the third degree.

4. The device (100) of claim 2, wherein the function is an equation of the fourth degree.

5. The device (100) of any one of claims 2-4, said drive signal being a voltage ($V_{dr}$) applied to the light source (211).

6. A method of measuring turbidity of a fluid in a household appliance for washing and rinsing goods, the method comprising the steps of:

   measuring (S201), by means of a turbidity sensor, turbidity of the fluid by emitting light through the fluid and detecting the amount of light passing through the fluid;
   measuring (S202) the temperature of the turbidity sensor; the method further being **characterized in** comprising the steps of:

      calculating (S203), as a function of the measured temperature, an adjusted value of the detected light, the function being an equation of at least the second degree; and
      determining (S204) the measured turbidity by analysing the amount of emitted light and the adjusted value of the detected light.

7. A device (100) for measuring turbidity of a fluid (110) in a household appliance for washing and rinsing goods, the device comprising:

   a turbidity sensor (120) arranged to measure turbidity of the fluid by means of a light source (211) emitting light through the fluid onto a light-sensitive element (221);
   a temperature sensor (125) for measuring the temperature of the turbidity sensor; the device further being **characterized in** comprising:
   a processor (130) communicatively connected to the turbidity sensor and the temperature sensor, the processor being arranged to calculate, as a function of the measured temperature, an adjusted value of the light detected by the light-sensitive element, the function being an equation of at least the second degree, and further being arranged to determine the measured turbidity by analysing amount of light output from the light source and the adjusted value of the light detected by the light-sensitive element.

8. The device (100) of claim 7, wherein the function is an equation of the third degree.

9. The device (100) of claim 7, wherein the function is an equation of the fourth degree.

10. A washing machine comprising the device (100) for measuring turbidity according to any of the claims 2-5 or claims 7-9.

11. A dishwasher (300) comprising a device (100) for measuring turbidity according to any of the claims 2-5 or claims 7-9.

12. A computer program (117) comprising computer-executable components for causing the device (100) for measuring turbidity according to any of the claims 2-5 to perform the steps recited in claim 1 or causing the device (100) for measuring turbidity according to any of the claims 7-9 to perform the steps recited in claim 6 when the computer-executable components are run on a processing unit (130) included in the device (100).

13. A computer readable storage medium (116) having the computer program (117) according to claim 12 embodied therein.


**Patentansprüche**

1. Verfahren zum Messen der Trübheit eines Fluids in einem Haushaltsgerät zum Waschen und Spülen von Waren, wobei das Verfahren die folgenden Schritte umfasst:

    Messen (S101) mittels eines Trübheitssensors der Trübheit des Fluids durch Aussenden von Licht durch das Fluid und durch Detektieren der Menge des sich durch das Fluid bewegende Lichts;
    Messen (S102) der Temperatur des Trübheitssensors;
    Bestimmen (S103) der gemessenen Trübheit durch Analysieren der Menge des ausgesendeten Lichts und der Menge des detektierten Lichts; wobei das Verfahren ferner **gekennzeichnet ist durch** die folgenden Schritte:

        Berechnen (S104) als Funktion der gemessenen Temperatur eines Wertes eines Ansteuersignals, das dem Trübheitssensor zuzuführen ist, um das ausgesendete Licht zu steuern, wobei die Funktion eine Gleichung wenigstens zweiten Grades ist; und Einstellen (S105) des Ansteuersignals auf den berechneten Wert und **dadurch** Steuern der Menge des ausgesendeten Lichts.

2. Vorrichtung (100) zum Messen der Trübheit eines Fluids (110) in einem Haushaltsgerät zum Waschen und Spülen von Waren, wobei die Vorrichtung Folgendes umfasst:

    einen Trübheitssensor (120), der dafür ausgelegt ist, die Trübheit des Fluids mittels einer Lichtquelle (211), die Licht durch das Fluid auf ein lichtempfindliches Element (221) aussendet, zu messen;
    einen Temperatursensor (125) zum Messen der Temperatur des Trübheitssensors; wobei die Vorrichtung ferner **gekennzeichnet ist durch**:
    einen Prozessor (130), der mit dem Trübheitssensor und mit dem Temperatursensor kommunikationstechnisch verbunden ist, wobei der Prozessor dafür ausgelegt ist, die gemessene Trübheit **durch** Analysieren der Menge von Licht, das von der Lichtquelle ausgegeben wird, und des Lichts, das **durch** das lichtempfindliche Element detektiert wird, zu bestimmen, wobei der Prozessor ferner ausgelegt ist, als Funktion der gemessenen Temperatur einen Wert eines Ansteuersignals ($V_{dr}$), das der Lichtquelle zuzuführen ist, zu berechnen, wobei die Funktion eine Gleichung wenigstens zweiten Grades ist, und das Ansteuersignal auf den berechneten Wert einzustellen und **dadurch** die Menge des von der Lichtquelle ausgegebenen Lichts zu steuern.

3. Vorrichtung (100) nach Anspruch 2, wobei die Funktion eine Gleichung dritten Grades ist.

4. Vorrichtung (100) nach Anspruch 2, wobei die Funktion eine Gleichung vierten Grades ist.

5. Vorrichtung (100) nach einem der Ansprüche 2-4, wobei das Ansteuersignal eine Spannung ($V_{dr}$) ist, die an die Lichtquelle (211) angelegt wird.

6. Verfahren zum Messen der Trübheit eines Fluids in einem Haushaltgerät zum Waschen und Spülen von Waren, wobei das Verfahren die folgenden Schritte umfasst:

    Messen (S201) mittels eines Trübheitssensors der Trübheit des Fluids durch Aussenden von Licht durch das Fluid und Detektieren der Menge des sich durch das Fluid bewegenden Lichts;
    Messen (S202) der Temperatur des Trübheitssensors, wobei das Verfahren ferner **gekennzeichnet ist durch** die folgenden Schritte:

        Berechnen (S203) als Funktion der gemessenen Temperatur eines eingestellten Wertes des detektierten Lichts, wobei die Funktion eine Gleichung wenigstens zweiten Grades ist; und

Bestimmen (S204) der gemessenen Trübheit **durch** Analysieren der Menge des ausgesendeten Lichts und des eingestellten Wertes des detektierten Lichts.

**7.** Vorrichtung (100) zum Messen der Trübheit eines Fluids (110) in einem Haushaltsgerät zum Waschen und Spülen von Waren, wobei die Vorrichtung Folgendes umfasst:

einen Trübheitssensor (120), der dafür ausgelegt ist, die Trübheit des Fluids mittels einer Lichtquelle (211), die Licht durch das Fluid auf ein lichtempfindliches Element (221) aussendet, zu messen;
einen Temperatursensor (125) zum Messen der Temperatur des Trübheitssensors; wobei die Vorrichtung ferner **gekennzeichnet ist durch**:
einen Prozessor (130), der mit dem Trübheitssensor und mit dem Temperatursensor kommunikationstechnisch verbunden ist, wobei der Prozessor dafür ausgelegt ist, als Funktion der gemessenen Temperatur einen eingestellten Wert des **durch** das lichtempfindliche Element detektierten Lichts zu berechnen, wobei die Funktion eine Gleichung wenigstens zweiten Grades ist und ferner dafür ausgelegt ist, die gemessene Trübheit **durch** Analysieren der Menge des von der Lichtquelle ausgegebenen Lichts und des eingestellten Wertes des durch das lichtempfindliche Element detektierten Lichts zu bestimmen.

**8.** Vorrichtung (100) nach Anspruch 7, wobei die Funktion eine Gleichung dritten Grades ist.

**9.** Vorrichtung (100) nach Anspruch 7, wobei die Funktion eine Gleichung vierten Grades ist.

**10.** Waschmaschine, die die Vorrichtung (100) zum Messen der Trübheit nach einem der Ansprüche 2-5 oder der Ansprüche 7-9 enthält.

**11.** Geschirrspülmaschine (300), die eine Vorrichtung (100) zum Messen der Trübheit nach einem der Ansprüche 2-5 oder der Ansprüche 7-9 enthält.

**12.** Computerprogramm (117), das computerausführbare Komponenten enthält, um die Vorrichtung (100) zum Messen der Trübheit nach einem der Ansprüche 2-5 zu veranlassen, die Schritte gemäß Anspruch 1 auszuführen, oder um die Vorrichtung (100) zum Messen der Trübheit nach einem der Ansprüche 7-9 zu veranlassen, die Schritte gemäß Anspruch 6 auszuführen, wenn die computerausführbaren Komponenten auf einer in der Vorrichtung (100) enthaltenen Verarbeitungseinheit (130) laufen.

**13.** Computerlesbares Speichermedium (116), in dem das Computerprogramm (117) nach Anspruch 12 verkörpert ist.

**Revendications**

**1.** Procédé de mesure de la turbidité d'un fluide dans un appareil ménager servant à laver et à rincer des produits, le procédé comportant les étapes consistant à :

mesurer (S101), au moyen d'un capteur de turbidité, la turbidité du fluide en émettant une lumière à travers le fluide et en détectant la quantité de lumière qui passe à travers le fluide ;
mesurer (S102) la température du capteur de turbidité ;
déterminer (S103) la turbidité mesurée en analysant la quantité de lumière émise et la quantité de lumière détectée ; le procédé étant en outre **caractérisé en ce qu'**il comporte les étapes consistant à :

calculer (S104), en fonction de la température mesurée, une valeur d'un signal d'excitation à fournir au capteur de turbidité pour commander la lumière émise, la fonction étant une équation au moins du second degré ; et
régler (S105) le signal d'excitation à la valeur calculée, commandant ainsi la quantité de lumière émise.

**2.** Dispositif (100) de mesure de la turbidité d'un fluide (110) dans un appareil ménager servant à laver et à rincer des produits, le dispositif comportant :

un capteur (120) de turbidité agencé pour mesurer la turbidité du fluide au moyen d'une source lumineuse (211) émettant une lumière à travers le fluide jusque sur un élément (221) sensible à la lumière ;
un capteur (125) de température servant à mesurer la température du capteur de turbidité ; le dispositif étant en outre **caractérisé en ce qu'**il comporte :
un processeur (130) en liaison de communication avec le capteur de turbidité et le capteur de température, le processeur étant agencé pour déterminer la turbidité mesurée en analysant la quantité de lumière émanant de la source lumineuse et la lumière détectée par l'élément sensible à la lumière, le processeur étant en outre agencé pour calculer, en fonction de la température mesurée, une valeur d'un signal d'excitation ($V_{dr}$) à fournir à la source lumineuse, la fonction étant une équation au moins du second degré, et pour régler le signal d'excitation à la valeur calculée, commandant ainsi la quantité de lumière émanant de la source lumineuse.

3. Dispositif (100) selon la revendication 2, la fonction étant une équation du troisième degré.

4. Dispositif (100) selon la revendication 2, la fonction étant une équation du quatrième degré.

5. Dispositif (100) selon l'une quelconque des revendications 2 à 4, ledit signal d'excitation étant une tension ($V_{dr}$) appliquée à la source lumineuse (211).

6. Procédé de mesure de la turbidité d'un fluide dans un appareil ménager servant à laver et à rincer des produits, le procédé comportant les étapes consistant à :

   mesurer (S201), au moyen d'un capteur de turbidité, la turbidité du fluide en émettant une lumière à travers le fluide et en détectant la quantité de lumière qui passe à travers le fluide ; mesurer (S202) la température du capteur de turbidité ; le procédé étant en outre **caractérisé en ce qu'**il comporte les étapes consistant à :

   calculer (S203), en fonction de la température mesurée, une valeur ajustée de la lumière détectée, la fonction étant une équation au moins du second degré ; et déterminer (S204) la turbidité mesurée en analysant la quantité de lumière émise et la valeur ajustée de la lumière détectée.

7. Dispositif (100) de mesure de la turbidité d'un fluide (110) dans un appareil ménager servant à laver et à rincer des produits, le dispositif comportant :

   un capteur (120) de turbidité agencé pour mesurer la turbidité du fluide au moyen d'une source lumineuse (211) émettant une lumière à travers le fluide jusque sur un élément (221) sensible à la lumière ; un capteur (125) de température servant à mesurer la température du capteur de turbidité ; le dispositif étant en outre **caractérisé en ce qu'**il comporte : un processeur (130) en liaison de communication avec le capteur de turbidité et le capteur de température, le processeur étant agencé pour calculer, en fonction de la température mesurée, une valeur ajustée de la lumière détectée par l'élément sensible à la lumière, la fonction étant une équation au moins du second degré, et étant en outre agencé pour déterminer la turbidité mesurée en analysant la quantité de lumière émanant de la source lumineuse et la valeur ajustée de la lumière détectée par l'élément sensible à la lumière.

8. Dispositif (100) selon la revendication 7, la fonction étant une équation du troisième degré.

9. Dispositif (100) selon la revendication 7, la fonction étant une équation du quatrième degré.

10. Machine à laver comportant le dispositif (100) de mesure de la turbidité selon l'une quelconque des revendications 2 à 5 ou des revendications 7 à 9.

11. Lave-vaisselle (300) comportant un dispositif (100) de mesure de la turbidité selon l'une quelconque des revendications 2 à 5 ou des revendications 7 à 9.

12. Programme (117) d'ordinateur comportant des composants exécutables par ordinateur servant à amener le dispositif (100) de mesure de la turbidité selon l'une quelconque des revendications 2 à 5 à réaliser les étapes selon la revendication 1 ou à amener le dispositif (100) de mesure de la turbidité selon l'une quelconque des revendications 7 à 9 à réaliser les étapes selon la revendication 6 lorsque les composants exécutables par ordinateur sont exécutés sur une unité (130) de traitement comprise dans le dispositif (100).

13. Support (116) de stockage lisible par ordinateur dans lequel est incorporé le programme (117) d'ordinateur selon la revendication 12.

Fig. 1

Measuring, by means of a turbidity sensor, turbidity of a fluid by emitting light through the fluid and detecting the amount of light passing through the fluid ⟩ S101

Measuring temperature of the turbidity sensor ⟩ S102

Determining the measured turbidity by analysing the amount of emitted light and the amount of detected light ⟩ S103

Calculating, as a function of the measured temperature, a value of a drive signal to be supplied to the turbidity sensor for controlling the emitted light ⟩ S104

Setting the drive signal to the calculated value, thereby controlling the emitted light ⟩ S105

Fig. 2

Measuring, by means of a turbidity sensor, turbidity of a fluid by emitting light through the fluid and detecting the amount of light passing through the fluid — S201

Measuring temperature of the turbidity sensor — S202

Calculating, as a function of the measured temperature, an adjusted value of the detected light — S203

Determining the measured turbidity by analysing the amount of emitted light and the adjusted value of the detected light — S204

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2206457 A
- EP 0748891 A

- US 5555583 A